Europäisches Patentamt

European Patent Office

Office européen des brevets

(11) Publication number: **0 356 094**
**A2**

# EUROPEAN PATENT APPLICATION

(21) Application number: **89308212.3**

(51) Int. Cl.⁴: **A23D 7/00**

(22) Date of filing: **14.08.89**

(30) Priority: **16.08.88 GB 8819445**

(43) Date of publication of application:
**28.02.90 Bulletin 90/09**

(84) Designated Contracting States:
**AT BE CH DE ES FR GB GR IT LI NL SE**

(71) Applicant: **UNILEVER PLC**
**Unilever House Blackfriars P.O. Box 68**
**London EC4P 4BQ(GB)**

(84) **GB**

Applicant: **UNILEVER NV**
**Burgemeester s'Jacobplein 1 P.O. Box 760**
**NL-3000 DK Rotterdam(NL)**

(84) **BE CH DE ES FR GR IT LI NL SE AT**

(72) Inventor: **Brown, Charles Rupert Telford**
**92 Castle Road**
**Bedford MK40 3PS(GB)**
Inventor: **Norton, Ian Timothy**
**29 Croft Way**
**Rushden Northants(GB)**
Inventor: **Wilding, Peter**
**113 Langham Road Raunds**
**Wellingborough Northants(GB)**

(74) Representative: **Dries, Antonius Johannes**
**Maria et al**
**Unilever N.V. Patent Division P.O. Box 137**
**NL-3130 AC Vlaardingen(NL)**

(54) **Food product.**

(57) A low fat continuous fat phase food spread contains a dispersion of a protein macrocolloidal composition of storage protein having a similar mouthfeel to fatty material for reducing calorific value.

EP 0 356 094 A2

## FOOD PRODUCT

The present invention is concerned with food products known as spreads which comprise an aqueous phase dispersed in a continuous fat phase and a process for preparing such a spread.

Spreads have been developed which as far as possible retain the essential mouthfeel and other attributes of margarine and butter, while offering a lower fat content and hence a lower calorific value in keeping with contemporary demands for diet control.

We have found that spreads having a reduced fat content, comprising an aqueous phase containing non-aggregated colloidal particles of denatured heat-settable storage protein, such as for example soya protein, have properties very similar to spreads of comparable composition but comprising substantially more fat. The present invention therefore provides spreads having a reduced fat content, of a quality comparable to spreads having a substantially higher fat content.

Thus one aspect of the present invention is a spread having a fat content of less than 65% w.w, comprising a continuous fat phase and a dispersed aqueous phase containing essentially non-aggregated colloidal particles of denatured heat-settable storage protein, at least 95% of the colloidal particles having an equivalent diameter in the range of 0.1 to 30 microns, more preferably in the range of 0.1 to 20 microns.

The present invention offers the advantage that the protein material used is cheap and widely available. In particular for those countries where essentially undenatured whey proteins are scarcely available, the present invention may offer a relief in that it offers the possibility of producing high quality reduced fat spreads, having favourable properties, without the necessity of employing expensive aqueous phase compositions.

Furthermore the present invention offers the advantage that the pH of the heat-settable storage protein based aqueous phases may vary within a broad pH range without having an adverse influence on the favourable properties of said aqueous phase. The aqueous phase, for instance, may suitably be incorporated in spreads of various types, comprising aqueous phases having a pH of at least 5.

As contrasted with the present composition, the whey protein based dispersions described in European patent application 0250623, when their advantageous rheological properties are needed, may only be applied within a very limited pH-range, which severely restricts their applicability. The whey protein based dispersions of the European patent application in spreads comprising an aqueous phase having a pH above 5.0. It is furthermore observed in European patent applications 0250623 that although soya proteins have been successfully spun into fibres having organoleptic properties that are reminiscent of myofibriliar substances such as meat, the texture is not universally applicable, since such fibres clearly do not emulate in any respect the mouthfeel experienced for example with fat or oils.

Yet another advantage of the present composition is that they may be more acceptable than whey protein based dispersions. Indeed nowadays many consumers will not accept products comprising animal ingredients such as whey proteins. Furthermore, in general fewer people appear to be allergic to heat-settable storage proteins than to milk proteins such as whey protein.

The term heat-settable storage protein as used throughout this application is meant to encompass those proteins of plant origin which are stored at relatively high concentration levels in particular plant tissues and which, when dissolved in water in an undenatured state and at an appropriate concentration level, are capable of forming a three dimensional gel network upon heat denaturation. Examples of suitable storage protein compositions are: soya protein, rape seed protein, cottonseed protein and sunflower protein. Preferably the heat-settable protein in the present spread is soya protein or a fraction thereof.

The spread according to the invention, when comprising an aqueous phase which is completely based on heat-settable storage protein, has an excellent quality. Products of comparable quality may be obtained, however, if the heat-settable storage proteins in the aqueous phase are partly replaced by denatured whey protein, egg-albumin and/or blood albumin. The present application therefore also encompasses spreads additionally comprising gel forming proteins other than heat-settable storage proteins. Preferably at least 50%, more preferably at least 70% by weight of the heat-settable proteins present in the aqueous phase are heat-settable storage proteins.

The colloidal protein based particles in the present spread preferably essentially consist of denatured heat-settable protein, more preferably of denatured heat-settable storage protein. Depending on the method of preparation and the ingredients used, however, small amounts of other components may be incorporated in the colloids. In general, the colloids comprise less than 40 wt.%, more preferably less than 20 wt.% of components other than heat-settable protein.

In order to obtain the desired spreadability and mouth feel, the aqueous phase of the present spread, should preferably comprise 5-30 wt.%, more preferably 8-25 wt.% of heat-settable storage protein.

2

Since the benefits of the present invention are particularly appreciated in spreads comprising a limited amount of fat, preferably the present spread comprises from 40-90 wt.%, more preferably from 45-85 wt.% of an aqueous phase.

In the present spread part of the heat-settable storage protein may be present in an undenatured state. Preferably, however, at least 90% of the heat-settable storage protein, as present in the spread according to the invention, is denatured. A suitable method for determining the degree of denaturation of the heat-settable storage protein is to measure the thermogram obtained by Differential Scanning Calorimetry of a sample of the aqueous phase.

The equivalent diameter distribution of the colloidal denatured storage protein particles may suitably be established from microscopical images. Although such may be done by hand, in order to obtain more reproducible results it is preferred to determine the particle size distribution by means of an image analysing computer. Of course the magnification applied should be suitable for properly determining the equivalent diameter distribution. For determining the diameter-distribution in the present compositions a magnification of x800 appeared to be appropriate.

Another aspect of the present invention is a process for preparing a spread comprising a continuous fat phase and a dispersed aqueous phase containing essentially non-aggregated colloidal particles of denatured heat-settable storage protein, comprising:

(a) forming a slurry of substantially undenatured storage protein and water,

(b) ensuring that the pH of the slurry is above the iso-electric point of the heat-settable storage protein,

(c) subjecting the slurry to a shear rate of at least 250 $s^{-1}$, while heating to a temperature sufficiently high to denature the heat-settable storage protein and subsequently

(d) mixing the slurry with a fat containing composition.

Preferably the storage protein of step (a) is an upgraded storage protein. By ungraded storage protein is meant a protein composition of plant origin that has been refined in that off-flavours, insoluble components and/or pigments have been removed almost completely. Preferably the upgraded storage protein is essentially free from off-flavours and insoluble carbohydrates.

In order to obtain a composition having desirable rheological properties, the slurry, before being subjected to the heating step, should contain a substantial amount of undenatured heat-settable storage protein. During the heat treatment, upon denaturation, said heat-settable protein will tend to form a macroscopical three dimensional network. By the application of high shear, however, the formation of a three dimensional network is counteracted, resulting in a composition comprising essentially non-aggregated colloidal particles of heat-denatured storage protein.

In the preferred embodiment of the process according to the invention shear rate, shear duration and heating temperature are combined in such a manner that at least 95% of the particles of denatured storage protein have an equivalent diameter in the range of 0.1 to 30 microns, more preferably within the range of 0.1 to 20 microns. Furthermore the heating temperature applied and duration of the heat treatment are preferably combined in such a manner that at least 30%, more preferably at least 60% of the undenatured heat-settable storage protein, present in the slurry before the heat treatment, is heat denatured.

The heating regime applied in the present process, preferably is such that on the one hand a rapid denaturation occurs, and on the other hand relatively little off-flavour is generated. Thus preferably the slurry is heated to a temperature within the range of at least 75° C, more preferably at least 85° C, particularly 90-110° C. Suitable heating times lie within the range of 1 to 100 seconds, more preferably in the range of 2 to 40 seconds. Preferably shorter heating times are combined with higher temperatures. Furthermore the slurry is preferably sheared at least as long as it is subjected to the heat treatment, so as to prevent the formation of a macroscopical gel network.

In a preferred embodiment of the present process the slurry is formed by admixing undenatured heat-settable storage protein and water so as to obtain a weight ratio of undenatured heat-settable storage protein to water in the range of 1:5 to 1:30. If ratios outside this range are applied either extremely high shear has to be applied, or much water needs to be removed before further processing of the slurry obtained after the combined heating and shearing.

We have found that the present process yields products having very favourable properties if, subsequently to the combined heating and shearing of step (c) and before the mixing step (d), the slurry is cooled over a temperature range of at least 5° C, while shearing at a shear rate of at least 250 $s^{-1}$, more preferably of at least 400 $s^{-1}$. The shear rate may be more appropriately determined by reference to the rate of displacement, which is preferably at least 2000 $sec^{-1}$. In particular, shearing should be continued to prevent aggregation until the temperature is below aggregation temperature.

The combined heating and shearing operation, as well as the combined cooling and shearing operation

3

as applied in the present process, may be performed in scraped surface heat exchangers such as Votators[R], high speed churns and apparatus as described in European patent application 0250623

The slurry used in the present process may comprise more than one type of heat-settable storage protein. Where the slurry comprises substantial amounts of two or more heat-settable storage proteins, having iso-electric points which are substantially different, the pH of the slurry should preferably be above the iso-electric point of the heat-settable storage protein having the highest iso-electric point.

In yet another preferred embodiment of the present process the heat treated and sheared slurry is mixed with a fat containing composition comprising at least 30 wt.% of fat, more preferably at least 40 wt.% of fat. In general the fat containing composition and heat/shear treated composition are admixed in a weight ratio in the range of 4:1 to 3:1, more preferably in the range of 3:1 to 2:1.

The products of the invention may be stabilised against bacteriological contamination by the addition of appropriate amounts of conventional stabilisers e.g. potassium solvate.

The present invention is further illustrated by means of the following examples:

Example 1

A low fat spread comprising 27 wt% of a continuous fat phase was prepared as follows:

60 wt% of a gelling aqueous phase, having a composition as given below, was blended with a fat blend containing 1.5 wt% of saturated mono-glycerides (Hymono 4404). The fat blend was composed as follows:

|  | Parts |
|---|---|
| Soya bean oil | 50 |
| Coconut oil | 11 |
| Soybean oil hardened to 41°C | 20 |
| Interesterified blend of coconut oil and soybean oil hardened to 41°C (93:67) | 19 |
| Aqueous phase | Parts |
| Gelatin (Extraco, Bloom 270) | 5 |
| Sodium chloride | 1.8 |
| Potassium sorbate | .1 |
| Water | 93.1 |
| Lactic acid to pH 5.5 | |

The aqueous phase at a temperature of 55°C was blended with the fat phase in a mixing vessel. The water continuous emulsion thus obtained was subsequently pasteurised at a temperature of about 85°C and then held in a feed tank at 40°C. The water continuous pre-mix was cooled to a temperature of 7°C and passed through a pair of cooled scraped surface heat exchanger units (Votator A) in series, operating at 1400 r.p.m., whereupon the temperature was 10°C. The water continuous dispersion so formed was fed to a crystalliser unit in which phase inversion took place; the oil continuous dispersion formed left the crystalliser unit having a temperature of 21°C and contained a significant crystal formation.

The oil continuous dispersion was subsequently combined, in a weight ratio of 1:0.48 with an aqueous composition, containing about 10 wt% of heat-denatured soya bean protein based macro-colloidal particles having an average size of 11.8 micron, which composition was made by the following procedure:-

A dispersion of soya protein was made by dispersing 3 Kg of soya concentrate flour (Newpro, l Lucas Ingredients Ltd Bristol) in 90 litres of deionised water containing 30g potassium sorbate as an anti-microbial agent. The dispersion of the flour was achieved by mixing the dry ingredients with water using a Silverson mixer/emulsifier operated at maximum speed. When the concentrate was adequately dispersed, mixing was continued for another 20 min. to ensure maximum dissolution of the soya proteins. Insoluble material was then removed by centrifuging at 10000 x g for 90 min.

The clarified extract was decanted and titrated to pH 5.3 with 5M hydrochloric acid to bring about precipitation of the protein. The acid was added drop wise over the period of about 5 mins to prevent localised high acid concentrations which may result in the formation of large protein precipitate aggregates. The vigorous stirring was employed to minimise the aggregation of the precipitated protein (cf Bell et al "Advances in Biochemical Eng." (1983). The final slurry of precipitated storage protein contained protein

4

particles with an average size of 10.4 micron (Malvern Mastersizer). The slurry was allowed to stand without agitation until the precipitated protein formed a sediment. The supernatant liquor was decanted and the remaining protein sediment containing 19% solids was used for subsequent processing.

A high speed churn (HC) comprising a jacketed cylindrical barrel 12 cms long and 4 cms internal diameter, with a smooth surface fitted with a smooth surface rotor and having an annular gap of 2 mm., was connected directly to a scraped surface heat exchanger. (A-unit) (Heynau - Moosacher Strasse 51, 8000 Munich, Germany). The high speed churn jacket temperature was set to 96°C and the A-unit jacket temperature was set to 12°C. The units were energised and the HC operated at 6000 rpm and the A-unit at 1000 rpm. At these speeds, the rate of material displacement in the HC was calculated to be 5655 s$^{-1}$ and 12000 s$^{-1}$ in the A unit. The protein slurry was preheated to 30°C and then pumped through the HC/A-unit combination at a throughput of 50 g/min. At this throughput, the residence times in the HC and A-units were 180s and 18s respectively. The resulting macro-colloidal dispersion emerged from the process at 26°C and had a paste-like consistency, displaying plastic flow behaviour when compressed. The mean size of the particles was measured to be 11.8 microns, at least 90% of the particles having an equivalent diameter in the range of 0.1 to 20 microns. (Malvern Mastersizer). The product was shown by DSC analysis to have a substantial amount (ca 80%) of the storage protein in the heat denatured state.

The cooled product was mixed at 20°C with the inverted fat continuous emulsion under mild conditions in a crystalliser unit rotating at a speed of 600 rpm. The product was obtained at 15°C and had a water content of about 27 wt% and was found to have properties similar to a fat spread containing 40 wt% fat.

## Example 2

Aqueous and fat phases were prepared and blended as described in Example 1.

The oil continuous dispersion obtained was subsequently combined, in a weight ratio of 1:0.48 with an aquous composition, containing about 12 wt% of heat-denatured milk whey protein based macro-colloidal particles having an average size of 4.5 micron, which composition was made by the following procedure.

Lactose (BDH Chemicals) was dissolved in deionised water at 45°C to give a concentration of 12 wt% and then cooled to 35°C. To this solution was added potassium sorbate (HP Bulmer Ltd Hereford HR4 OLE England) (0.1 wt%) and soluble UF whey protein concentrate (12 wt%) (Milei GmbH D-7970 Leutkirch, Adrazhofen im Allau, West Germany) with vigorous stirring using a Moritz mixer (Moritz Chemical Engineering Company) at speed setting ten. Citric acid (5M) was added to bring pH to 4.0. The resulting slurry was then allowed to stand for 1 hour without agitation to facilitate deaeration. The deaerated protein dispersion was heated to 45°C and passed through a high speed churn as described in Example 1. The jacket temperature was heated to 95°C with steam heated water and the rotor operated at 2000 r.p.m. giving a displacement rate of 3000 s$^{-1}$.

The heat denatured protein macro-colloid emerged from the from heat exchanger at a temperature of 89°C at the rate of 15 Kg per hr and collected in 250g plastic tubs. The hot product was cooled to 29°C and mixed with the inverted fat continuous emulsion under mild conditions in a second crystalliser unit operating at a speed of 600 r.p.m. The product was obtained at 15°C and had a fat content of about 27 wt% and was found to have properties similar to a fat spread containing 40 wt% fat.

The above procedure was repeated twice except that the aqueous whey protein dispersion and inverted oil-continuous emulsion were combined in such weight ratios that products comprising 30 wt% and 35 wt% were obtained. The spreads thus obtained appared to display a rheology and mouth response similar to the spread comprising 27 wt% fat.

## Claims

1. Spread having a fat content of less than 65% w/w, comprising continuous fat phase and a dispersed aqueous phase containing essentially non-aggregated colloidal particles of denatured heat settable storage protein, at least 95% of the colloidal particles having an equivalent diameter in the range of 0.1 to 30 microns, more preferably in the range of 0.1 to 20 microns.

2. Spread according to claim 1, wherein the aqueous phase comprises from 5 to 30 wt.% of heat settable storage protein.

3. Spread according to claim 1 or 2, wherein the heat-settable storage protein is soya protein or a fraction thereof.

4. Spread according to claim 1, 2 or 3, wherein the spread comprises from 40-90 wt.%, more preferably from 45-85 wt.% of an queous phase.

5. Spread according to any of the preceding claims in which additional gel forming proteins are present and in which at least 70 wt.% of the total gel forming protein present is said storage protein.

6. Spread according to any of the preceding claims in which the concentration of said storage protein in the aqueous phase is from 5 to 30 wt.%.

7. Spread according to any of the preceding claims in which 90 wt.% of the said storage protein is denatured.

8. Process for preparing a spread comprising a continuous fat phase and a dispersed aqueous phase containing essentially non-aggregated colloidal particles of denatured heat-settable storage protein, comprising:

(a) forming a slurry of substantially undenatured storage protein and water,

(b) ensuring that the pH of the slurry is above the iso-electric point of the heat-settable storage protein,

(c) subjecting the slurry to a shear rate of at least 250 s$^{-1}$, while heating to a temperature sufficiently high to denature the heat-settable storage protein, and subsequently

(d) mixing the slurry with a fat containing composition.

9. Process according to claim 8, wherein subsequent to the combined heating and shearing and before the mixing of the slurry with the fat containing composition, the slurry is cooled over a temperature range of at least 5 °C, while shearing at a shear rate of at least 250 s$^{-1}$, more preferably of at least 400 s$^{-1}$, to prevent aggregation during cooling.

10. Process according to claim 8 or 9, wherein shear rate, shear duration and heating temperature are combined in such a manner that at least 95% of the particles of denatured storage protein have an equivalent diameter in the range of 0.1 to 30 microns, more preferably within the range of 0.1 to 20 microns.

11 Process according to claim 8, 9 or 10, wherein the storage protein of step (a) is upgraded storage protein.

12. Process according to any one of claims 8-11 wherein the slurry is formed by admixing undenatured heat-settable storage protein and water so as to obtain a weight ratio of undenatured heat-settable storage protein to water in the range of 1:5 to 1:30.

13. Process according to any one of claims 8-12 wherein the fat containing composition comprises at least 30 wt.% of fat.

14. Spread having a fat content of less than 65% w/w, whenever obtainable by a process as claimed in any one of the preceding claims 8 to 13.